# EUROPÄISCHE PATENTSCHRIFT

(11) **EP 3 315 267 B1**
(45) Veröffentlichungstag und Bekanntmachung des Hinweises auf die Patenterteilung: **04.12.2019**
(21) Anmeldenummer: 16195488.8
(22) Anmeldetag: 25.10.2016
(51) Int. Cl.: B30B 15/26, G05B 13/04, B25J 9/16, B21D 43/05, B30B 15/14, G05B 19/418

(54) **VERFAHREN ZUR OPTIMIERUNG VON BEWEGUNGSPROFILEN, VERFAHREN ZUR BEREITSTELLUNG VON BEWEGUNGSPROFILEN, STEUEREINRICHTUNG, ANLAGE UND COMPUTERPROGRAMMPRODUKT**
METHOD FOR OPTIMIZING OF MOVEMENT PROFILES, METHOD FOR PROVIDING MOVEMENT PROFILES, CONTROL DEVICE, SYSTEM AND COMPUTER PROGRAM PRODUCT
PROCÉDÉ D'OPTIMISATION DE PROFILS DE MOUVEMENT, PROCÉDÉ DE FOURNITURE DE PROFILS DE MOUVEMENTS, DISPOSITIF DE COMMANDE, INSTALLATION ET PRODUIT-PROGRAMME INFORMATIQUE

(43) Veröffentlichungstag der Anmeldung: 02.05.2018
(73) Patentinhaber: Siemens Aktiengesellschaft, 80333 München (DE)
(72) Erfinder: Hoja, Stephan, 90556 Cadolzbrug (DE); Schlegel, Oleg, 91058 Erlangen (DE); Lorz, Fabian, 91341 Röttenbach (DE)

(56) Entgegenhaltungen:
- EP-A1- 2 808 750
- EP-A2- 1 705 541

## Beschreibung

Die Erfindung betrifft ein Verfahren zur Optimierung von Bewegungsprofilen sowie ein Verfahren zur Bereitstellung von Bewegungsprofilen. Die Erfindung betrifft weiter eine Steuereinrichtung, eine Anlage und ein Computerprogrammprodukt.

Insbesondere bei Pressenlinien, die vollautomatisch ablaufen, werden die Werkstücke von einer Presse zu einer weiteren Presse mit einem Transfersystem überführt. Das Transfersystem weist Aufnahmeelemente zur Aufnahme von Werkstücken auf, wobei die Werkstücke von der jeweiligen Presse nacheinander bearbeitet werden.

Regelmäßig ist es zeitaufwändig, eine solche Anlage einzurichten und die jeweilige Bewegung zueinander zu synchronisieren. Eine solche Anlage weist eine Mehrzahl von Pressen auf, wobei zwei der Pressen über jeweils ein Transfersystem verbunden sind.

Die europäische Anmeldung EP 1 705 541 A2 beschreibt eine Robotersteuerung. Die Steuerung berechnet erste Bewegungszeiten bei der Bewegung einer Roboterhand von einer Startposition in eine Synchron-Arbeits-Position in der kürzesten Zeit und bestimmt die längste erste Bewegungszeit als zweite Bewegungszeit. Die Steuerung generiert für jeden Roboter einen Roboter Ablaufplan zur Bewegung jeder Roboterhand ohne zu stoppen von der Startposition in die Synchron-Arbeits-Position in der zweiten Bewegungszeit.

Daher ist es Aufgabe der Erfindung, Bewegungen in der Anlage besser aufeinander abzustimmen und ein Einrichten einer solchen Anlage zu vereinfachen.

Die Aufgabe wird durch ein Verfahren nach Anspruch 1 gelöst.

Die Aufgabe wird weiter durch ein Computerprogrammprodukt nach Anspruch 12 gelöst.

Die Aufgabe wird darüber hinaus durch ein Verfahren zur Bereitstellung gemäß Anspruch 13 gelöst.

Die Aufgabe wird zudem durch eine Steuereinrichtung nach Anspruch 14 sowie durch eine Anlage nach Anspruch 15 gelöst.

Weiterbildungen der Erfindung und vorteilhafte Ausführungen sind Gegenstand der abhängigen Ansprüche.

Obgleich die Erfindung sich lediglich auf eine Presse bezieht, kann die Presse auch durch eine andere Produktionsmaschine sowie eine Verpackungsmaschine oder eine sonstige Arbeitsmaschine angewandt werden.

Das Verfahren zur Optimierung von Bewegungsprofilen in einer Anlage, wobei die Anlage zumindest eine Presse mit einem Werkzeug und eine Mehrzahl von Transfersystemen aufweist, wobei die Bewegung des jeweiligen Werkzeugs durch jeweils ein Pressen-Bewegungsprofil beschrieben wird und die Bewegung des jeweiligen Transfersystems durch jeweils ein Transfer-Bewegungsprofil beschrieben wird, wobei die Optimierung der Bewegungsprofile folgende Schritte umfasst:
- Das jeweilige Transfer-Bewegungsprofil wird vorgegeben;
- anhand des jeweils Transfer-Bewegungsprofils werden Synchronisationspunkte vorgegeben, wobei die Synchronisationspunkte den Eintritt des Aufnahmeelements in die Presse und den Austritt des Aufnahmeelements aus der Presse definieren;
- den Synchronisationspunkten sind jeweils Zeitpunkte oder Master-Drehwinkel zugeordnet;
- ein erster Zeitbereich oder ein erster Master-Drehwinkelbereich werden zwischen dem ersten Synchronisationspunkt und dem zweiten Synchronisationspunkt definiert;
- ein zweiter Zeitbereich oder ein zweiter Master-Drehwinkelbereich werden zwischen dem dritten Synchronisationspunkt und dem vierten Synchronisationspunkt definiert;
- die Zeitbereiche oder die Master-Drehwinkelbereiche werden sukzessive zu einer Mindestzeit oder zu einem Mindestdrehwinkelbereich verkürzt, solange vorgegebene Randbedingungenen eingehalten werden;
- anhand der Mindestzeiten oder anhand der Mindestdrehwinkelbereiche werden die jeweiligen Pressen-Bewegungsprofile erstellt.

Das Transfersystem dient zur Überführung eines Werkstücks von einer Presse zu einer weiteren Presse. Weiter dient das Transfersystem zum Einbringen des Werkstücks in die Presse und zum Ausbringen des Werkzeugs aus der Presse. Das Transfersystem umfasst zumindest ein Aufnahmeelement, wobei das Aufnahmeelement zur Aufnahme und zum Transport des Werkstücks dient.

Das Werkstück wird durch die jeweilige Presse bearbeitet.

Die Anlage dient vorzugsweise zur schrittweisen Bearbeitung des Werkstücks. Das Werkstück durchläuft daher aufeinanderfolgend eine Mehrzahl von Pressen.

Die Presse weist meist ein oberes Werkzeug zur Bearbeitung des Werkstücks und ein unteres Werkzeug zur Aufnahme des Werkzeugs auf, wobei in einem einfachen Fall nur das obere Werkzeug zur Bearbeitung bewegt wird. Die jeweilige Presse ist vorteilhaft als Servo-Presse ausgebildet.

Die Erfindung ist jedoch auch anwendbar, wenn die Presse als Ziehkissenpresse ausgestaltet ist.

Ein Bewegungsprofil beschreibt die Bewegung des Werkzeugs der jeweiligen Presse (Pressen-Bewegungsprofil) oder der Bewegung eines Aufnahmeelements des Transfersystems (Transfer-Bewegungsprofil). Die Bewegung wird vorteilhaft durch eine Ortskurve beschrieben, wobei zumindest bereichsweise zu Punkten der Ortskurve eine Geschwindigkeit und/oder ein (Dreh-)Moment zugeordnet sind. Bei dem Transfer-Bewegungsprofil kann weiter auch eine Ausrichtung des jeweiligen Aufnahmeelements vorgegeben sein.

Das Pressen-Bewegungsprofil beschreibt vorzugsweise die Bewegung des oberen Werkzeugs. Die Bewegung des Werkzeugs erfolgt meist periodisch in vertikaler Richtung auf und ab. Meist ist das Pressen-Bewegungsprofil lediglich während der Bearbeitung des Werkstücks vorgegeben, d.h., solange das obere Werkzeug das Werkstück berührt. Die Presse ist bevorzugt als Servo-Presse ausgebildet. Bei Servo-Pressen kann das Pressen-Bewegungsprofil frei vorgegeben sein. Bevorzugt ist das Pressen-Bewegungsprofil durch eine Kurvenscheibenfunktion vorgegeben. Bei einem solchen Pressen-Bewegungsprofil kann die periodische Bewegung den jeweils vorliegenden Bedürfnissen angepasst werden.

Das jeweilige Pressen-Bewegungsprofil ist vorteilhaft als Kurvenscheibenfunktion vorgegeben. Die Kurvenscheibenfunktion gibt die Bewegung des jeweiligen Werkzeugs in Abhängigkeit eines Master-Drehwinkels vor. Der Master-Drehwinkel wird von einer virtuellen Achse vorgegeben, wobei die virtuelle Achse der Anlage zugeordnet ist.

Die einzelnen Bewegungsprofile sind vorteilhaft bis auf einen Versatz jeweils gleich ausgebildet.

Das Transfer-Bewegungsprofil orientiert sich vorteilhaft ebenfalls an dem Master-Drehwinkel der virtuellen Achse.

Das Transfer-Bewegungsprofil weist vier Synchronisationspunkte auf, wobei:
- der erste Synchronisationspunkt den Eintritt des zweiten Transfersystems in die Presse definiert,
- der zweite Synchronisationspunkt den Austritt des zweiten Transfersystems aus der Presse definiert,
- der dritte Synchronisationspunkt den Eintritt des ersten Transfersystems in die Presse definiert,
- der vierte Synchronisationspunkt den Austritt des ersten Transfersystems aus der Presse definiert.

Das zweite Transfersystem dient somit zum Entfernen des Werkstücks aus der Presse und das erste Transfersystem dient dann zum Einbringe eines weiteren Werkstücks in die Presse. Normalerweise erfolgt das Ausbringen des (bearbeiteten) Werkstücks vor dem Einbringen des weiteren Werkstücks.

Die jeweiligen Synchronisationspunkte entsprechen Zeitpunkten oder Master-Drehwinkeln der virtuellen Achse.

Die Ortskurve des jeweiligen Transfer-Bewegungsprofils ergibt sich aus der Geometrie und den Abmessungen der jeweiligen Presse, insbesondere dem jeweiligen Werkzeug der Pressen, sowie aus der Geometrie und den Abmessungen des Werkstücks. Die Ortskurve (auch als Bahnkurve bezeichnet) wird derart berechnet, dass das Werkstück ohne Kollision mit der Presse aus derselben herausgebracht und optional in die jeweils weitere Presse eingebracht werden kann.

Die Geschwindigkeit ist meist durch die Motorleistung des Transfersystems sowie durch die Aufnahmeelemente begrenzt.

Ein Aspekt der Erfindung ist es, die Transfer-Bewegungsprofile derart zu synchronisieren, dass, sobald das zweite Transfersystem das Werkstück aus der Presse aufnehmen kann, das Transfersystem in die Presse zur Ausbringung des Werkstücks in die Presse eindringt. Das zweite Transfersystem entfernt das Werkstück aus der Presse. Sobald das Werkstück vom unteren Werkzeug der Presse aufgenommen worden ist, kann das erste Transfersystem ein (neues) Werkstück auf dem unteren Werkzeug der Presse platzieren. Würde das erste Transfersystem warten, bis das zweite Transfersystem mit dem Werkstück die Presse verlassen hätte, um einzufahren, ginge Zeit verloren. Daher dringt das erste Transfersystem bereits früher in die Presse ein, um das (neue) Werkstück auf dem unteren Werkzeug zu platzieren. Hierbei darf das jeweilige Transfersystem bzw. das Werkstück miteinander oder der Presse nicht kollidieren. Daher muss das jeweilige Bewegungsprofil Randbedingungen einhalten. Die Synchronisation erfolgt durch die Synchronisationspunkte, wobei der erste und der zweite Synchronisationspunkt eine Ausbringzeit des Werkstücks definieren. Weiter definieren der dritte und der vierte Synchronisationspunkt eine Einbringzeit.

Im Rahmen des Verfahrens werden Zeitbereiche "Ausbringzeit" und "Einbringzeit" überlappt, also bildlich übereinander geschoben. Durch die zeitliche Überlappung kann eine möglichst kurze Zeit ermittelt werden, bei welcher, bei Einhaltung der Randbedingungen, sich ein Transfersystem in der Presse befindet. Durch die Verkürzung der Zeit kann die Presse schneller laufen, d.h., die Geschwindigkeit des ersten Bewegungsprofils kann erhöht werden. Eine Erhöhung der Geschwindigkeit führt zu einer Erhöhung der Hubzahl der Presse. Weiter kann durch eine Synchronisation der jeweiligen Presse-Bewegungsprofile untereinander der Durchlauf des jeweiligen Werkstücks durch die Anlage verkürzt werden.

In einer vorteilhaften Ausgestaltung des Verfahrens wird als weiterer Schritt vom Verfahren umfasst:
Synchronisation der jeweils Pressen-Bewegungsprofile zueinander anhand eines Versatzes.

Unter einem Versatz wird ein Zeitversatz oder ein Master-Drehwinkelversatz der virtuellen Achse des jeweiligen Pressen-Bewegungsprofils zu einem weiteren Pressen-Bewegungsprofil verstanden.

Bei ansonsten gleichen Bewegungsprofilen, insbesondere durch die gleiche Kurvenscheiben-Funktion vorgegebenen Bewegungsprofile, entspricht ein Versatz der Bewegungsprofile einem phasengleichen Nachlaufen des einen Pressen-Bewegungsprofils eines andere Pressen-Bewegungsprofils.

Durch den Versatz ist eine Verkürzung der Bearbeitungszeit des Werkstücks in einer vorgegebenen Anlage möglich. So kann der Durchsatz einer Anlage vorteilhaft erhöht werden.

In einer weiteren vorteilhaften Ausgestaltung des Verfahrens wird der Versatz derart eingestellt, dass sich eine möglichst kurze Durchlaufzeit eines Werkstücks durch die Anlage ergibt.

Eine besonders einfache Anpassung der Bewegungsprofile erfolgt durch die ledigliche Berücksichtigung des Versatzes der Bewegungsprofile zueinander. Damit ist eine einfache Optimierung der Bewegung in der Anlage möglich.

Bei einer weiteren vorteilhaften Ausgestaltung des Verfahrens wird als weiterer Schritt vom Verfahren umfasst:
- Vorgabe des Versatzes zwischen dem jeweiligen Transfer-Bewegungsprofilen,
- Anpassung der jeweiligen Transfer-Bewegungsprofile an den Versatz.

Durch die Vorgabe eines Versatzes zwischen den jeweiligen Pressen-Bewegungsprofilen kann die Leistungsaufnahme der jeweiligen Presse untereinander ausgeglichen werden. So kann eine Spitzen-Leistungsaufnahme in kurzen Zeitbereichen verhindert werden, insbesondere falls der Versatz so eingestellt wird, dass die von einer Presse abgegebene Energie einer anderen Presse zugeführt werden kann.

Würde ein Versatz gleich Null gewählt werden, so würden alle Pressen ggf. gleichartig bewegt werden und die Spitzen-Energieaufnahmen würden sich addieren. Durch einen vorteilhaft gewählten Versatz können die Leistungsspitzen ausgeglichen werden.

Bei einer weiteren vorteilhaften Ausgestaltung des Verfahrens wird der Versatz derart angepasst, dass die Anlage eine möglichst konstante Leistungsaufnahme aufweist.

Durch eine möglichst konstante Leistungsaufnahme können die Betriebskosten der Anlage gemindert werden.

Bei einer weiteren vorteilhaften Ausgestaltung des Verfahrens wird eine Geschwindigkeit des Transfer-Bewegungsprofils zwischen dem jeweiligen zweiten Synchronisationspunkt und dem jeweiligen dritten Synchronisationspunkt und/oder zwischen dem jeweils ersten Synchronisationspunkt und vierten Synchronisationspunkten verändert wird.

Die Geschwindigkeit wird vorteilhaft in dem Bereich verändert, in dem das Transfersystem außerhalb der Presse bewegt wird. Das Transfer-Bewegungsprofil des Transfersystems beschreibt die Bewegung des Aufnahmeelements und optional des Werkstücks, welches das Aufnahmeelement trägt.

Die Geschwindigkeit kann bereichsweise verringert werden, falls der Versatz zweier Pressen-Bewegungsprofile dies vorgibt. Gegebenenfalls kann in einem Bereich zwischen den Pressen das Bewegungsprofil eine Wartezeit vorsehen. Eine solche Wartezeit kann einem Versatz der Pressen-Bewegungsprofile zweier Pressen geschuldet sein.

Bei einer weiteren vorteilhaften Ausgestaltung des Verfahrens werden die jeweiligen Transfer-Bewegungsprofile in ihrer Bahnkurve der Geometrie und/oder den Abmessungen der jeweiligen Presse angepasst.

Eine Anpassung erfolgt insbesondere, um unter Einhaltung von Randbedingungen die Geschwindigkeit des Bewegungsprofils zu erhöhen.

Eine Optimierung der Ortskurve des jeweiligen Bewegungsprofils erfolgt mit bekannten Mitteln. Beispielhaft mit Optimal-Control-Algorithmen. Eine Optimierung verkürzt vorteilhaft die Ortskurve und/oder vermindert die Krümmung der Ortskurve. Durch die Optimierung der Ortskurve kann die Geschwindigkeit des jeweiligen Bewegungsprofils erhöht werden und das Werkstück so schneller in der Anlage bearbeitet werden.

Bei einer weiteren vorteilhaften Ausgestaltung des Verfahrens berücksichtigen die Randbedingungen für das jeweilige Transfer-Bewegungsprofil
- die Geometrie der jeweiligen Presse, insbesondere die Geometrie des jeweiligen Werkzeugs der Presse,
- die Geometrie des jeweiligen Werkstücks sowie
- optional das Pressen-Bewegungsprofil.

Bei der Geometrie der Presse, des Werkzeugs und/oder des Werkstücks werden die Form und die Abmessung desselben als Randbedingungen bei der Berechnung und/oder Vorgabe des Bewegungsprofils berechnet.

Durch die Bewegung des Werkzeugs ändern sich die Geometrie und/oder die Abmessungen. Dies kann vom jeweiligen Bewegungsprofil berücksichtigt werden.

Durch diese Ausführung ist eine besonders genaue Abstimmung der Bewegungsprofile möglich. Weiter können Kollisionen wirksam vermieden werden.

Bei einer weiteren vorteilhaften Ausgestaltung des Verfahrens berücksichtigen die Randbedingungen für das jeweilige Pressen-Bewegungsprofil die Bearbeitung des Werkstücks und/oder einen Sicherheitsabstand vom jeweils bewegten Werkzeug zum Werkstück und zum jeweiligen Transfersystem.

Der Sicherheitsabstand ist vorteilhaft so gewählt, dass eine Presse bei einem unvorhergesehenen Stillstand eines Transfersystems noch anhalten kann, ohne mit dem Werkstück oder dem jeweiligen Transfersystem, insbesondere dem Aufnahmeelement des Transfersystems, zu kollidieren.

Das Bewegungsprofil zur Bearbeitung des Werkstücks ist jeweils bereichsweise vorgegeben. So kann eine qualitativ hochwertige Bearbeitung sichergestellt werden.

Bei einer weiteren vorteilhaften Ausgestaltung des Verfahrens wird das jeweilige Transfer-Bewegungsprofil und/oder das jeweilige Pressen-Bewegungsprofil zwischen einzelnen Schritten des Verfahrens in der Geschwindigkeit verändert, optional mit einer Wartezeit ausgestattet und/oder es erfolgt eine Veränderung der Bahnkurve.

Diese Ausgestaltung zeigt Möglichkeiten auf, einen Versatz zwischen den jeweiligen Pressen-Bewegungsprofilen zu berücksichtigen. Insbesondere bei einer möglichen Verringerung der Geschwindigkeit kann auch die Geschwindigkeit konstant gehalten und die Ortskurve verlängert werden. So können Beschleunigungen des Werkstücks vermindert und damit das Werkstück beim Transport geschont werden.

Bei einer weiteren vorteilhaften Ausgestaltung des Verfahrens ist das jeweilige Pressen-Bewegungsprofil, insbesondere die Geschwindigkeit des Pressen-Bewegungsprofils, als Kurvenscheibenfunktion ausgebildet.

Seit einigen Jahren werden herkömmliche Exzenter-Pressen vermehrt durch Servo-Pressen ersetzt. Durch den Einsatz von Servo-Pressen kann das vormals Sinus-förmige Pressen-Bewegungsprofil durch ein, der Bearbeitung angepasstes Pressen-Bewegungsprofil ersetzt werden. Insbesondere die Geschwindigkeit des Pressen-Bewegungsprofils ist daher vorteilhaft durch eine Kurvenscheiben-Funktion darstellbar.

Da es eine Vielzahl von Methoden gibt, Kurvenscheiben zu berechnen, ist die Bereitstellung und die Anpassung oder Optimierung der Pressen-Bewegungsprofile einfach möglich.

Das Computerprogrammprodukt kann auf einem Computer-lesbaren Medium installiert oder abgespeichert sein. Das Computerprogrammprodukt ist zur Installation und zum Ablauf auf einer Recheneinheit ausgebildet, bei der im Rahmen des Ablaufs des Computerprogrammprodukts auf der Recheneinheit ein Verfahren gemäß der vorstehend Ausführungen ausgeführt wird.

Zur Durchführung des Verfahrens wird das Computerprogramm in den Arbeitsspeicher geladen und mit einem Prozessor (CPU) der Recheneinheit ausgeführt.

Bei der Verwendung des Verfahrens zur Bereitstellung von zumindest einem Transfer-Bewegungsprofil und/oder zumindest einem Pressen-Bewegungsprofil für die Anlage wird das vorstehend ausgeführte Verfahren durchgeführt oder das Computerprogrammprodukt auf der Recheneinheit ausgeführt.

Die Steuereinrichtung ist zur Steuerung der Anlage ausgebildet, wobei die Steuereinrichtung zur Steuerung von Pressen vorgesehen ist, wobei die Steuerung anhand von Bewegungsprofilen erfolgt, die mittels eines Verfahrens nach einem der Ansprüche 1 bis 12 bereitgestellt worden sind.

Die Anlage weist zumindest eine Presse und zumindest zwei Transfersysteme sowie eine oben beschriebene Steuereinrichtung auf.

Im Folgenden wird die Erfindung anhand von Figuren näher beschrieben und erläutert. Hierbei bezeichnen gleiche Bezugszeichen die gleichen Elemente. Die gezeigten Merkmale der Ausführungsformen können (auch einzeln) vom Fachmann zu neuen Ausführungen der Erfindung zusammengesetzt werden. Es zeigen:
- FIG 1: eine Anlage,
- FIG 2: eine Überlagerung von Zeitbereichen,
- FIG 3: eine Darstellung des Verfahrens,
- FIG 4: eine Darstellung eines Teils des Verfahrens,
- FIG 5: Bewegungsprofile sowie
- FIG 6: eine Anlage mit einer Steuereinrichtung.

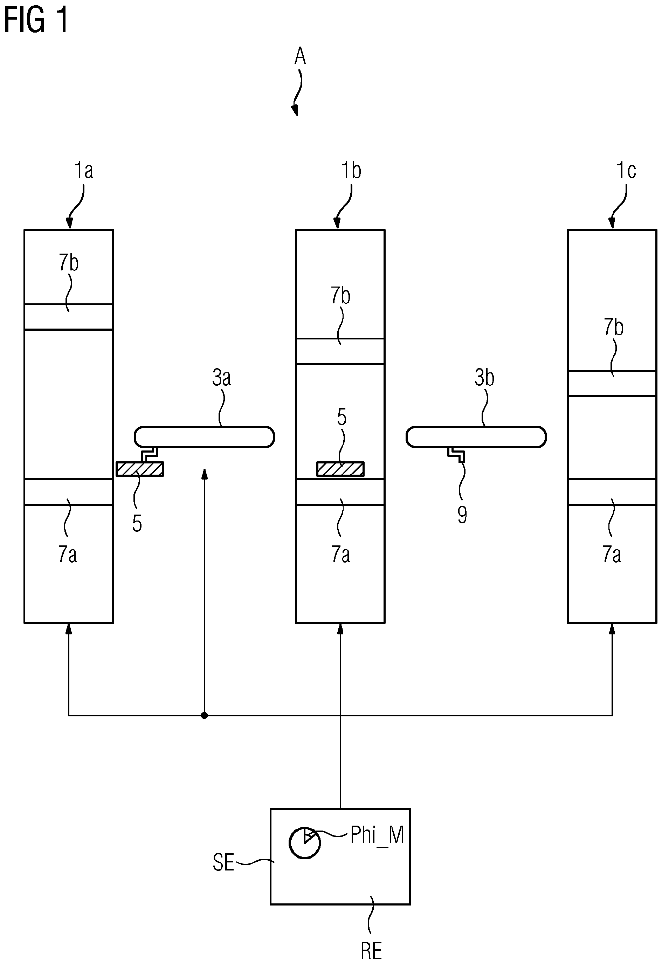

**FIG 1** zeigt eine Anlage A. Die Anlage A weist eine erste Presse 1a, eine zweite Presse 1b und eine dritte Presse 1c auf. Ein Werkstück 5 wird mit einem ersten Transfersystem 3a von der ersten Presse 1a zur zweiten Presse 1b überführt. Ein anderes Werkstück 5 befindet sich in der zweiten Presse 1b und wird in der zweiten Presse 1b bearbeitet. Zur Überführung eines Werkstücks 5 von der zweiten Presse 1b und der dritten Presse 1c dient ein zweites Transfersystem 3b. Die Transfersysteme 3a, 3b weisen jeweils ein Aufnahmeelement 9 auf. Das Aufnahmeelement 9 dient zur Aufnahme und zum Transport des Werkstücks 5 von einer Presse 1a, 1b, 1c zur anderen Presse 1a, 1b, 1c. Das jeweilige Transfersystem 3a, 3b, insbesondere das jeweilige Aufnahmeelement 9, dient zum Einbringen und zum Ausbringen des Werkstücks 5 in die bzw. aus der Presse 1a, 1b, 1c.

Die Pressen 1a, 1b, 1c weisen jeweils ein oberes Werkzeug 7b und jeweils ein unteres Werkzeug 7a auf. Das untere Werkzeug 7a dient insbesondere zur Aufnahme des Werkstücks 5 und das obere Werkzeug 7b dient zur Bearbeitung des Werkstücks 5.

Die Pressen 1a, 1b, 1c sind mit einer Steuereinrichtung SE verbunden. Die Steuereinrichtung SE umfasst eine virtuelle Achse, die einen Master-Drehwinkel Phi_M vorgibt. Mit dem Master-Drehwinkel Phi M kann auch oder alternativ eine Zeit t vorgegeben werden. An dem Master-Drehwinkel Phi_M orientieren sich Pressen-Bewegungsprofile B1. Der Master-Drehwinkel Phi_M oder die Zeit t entspricht einem Taktgeber für die Pressen 1a, 1b, 1c. Weiter dient die Steuereinrichtung zur Ansteuerung des jeweiligen Transfersystems 3a, 3b. Vorzugsweise orientieren sich Transfer-Bewegungsprofile B2 an dem Master-Drehwinkel Phi_M oder an der Zeit t.

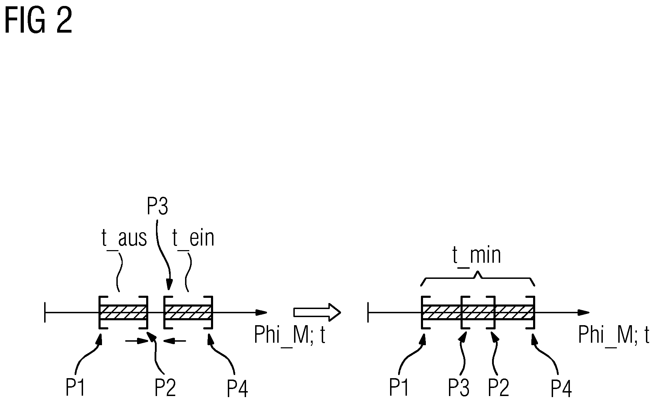

**FIG 2** zeigt eine Überlappung von Zeitbereichen t_ein, t_aus. Die Zeitbereiche t_ein, t_aus werden durch Synchronisationspunkte P1, P2, P3, P4 definiert. Ein erster Zeitbereich t_aus (Ausbring-Zeitbereich) beginnt zu einem ersten Synchronisationspunkt P1 und endet bei einem zweiten Synchronisationspunkt P2. Der erste Synchronisationspunkt P1 definiert den Eingang des Transfersystems 3a, 3b in die Presse 1a, 1b, 1c. Der zweite Synchronisationspunkt P2 definiert den Ausgang des Transfersystems 3a, 3b aus der Presse 1a, 1b, 1c.

Ein zweiter Zeitbereich t_ein (Einbring -Zeitbereich) beginnt zu einem dritten Synchronisationspunkt P3 und endet bei einem vierten Synchronisationspunkt P4. Der dritte Synchronisationspunkt P3 definiert den Eingang des Transfersystems 3a, 3b in die Presse 1a, 1b, 1c. Der vierte Synchronisationspunkt P4 definiert den Ausgang des Transfersystems 3a, 3b aus der Presse 1a, 1b, 1c.

Der erste Zeitstrahl zeigt die Zeitbereiche t_ein, t_aus nacheinander zeitlich folgend.

In Bezug zum jeweiligen Transfer-Bewegungsprofil B2 definiert
- der erste Synchronisationspunkt P1 den Eintritt des zweiten Transfersystems 3b in die erste Presse 1a,
- der zweite Synchronisationspunkt P2 den Austritt des zweiten Transfersystems 3b aus der ersten Presse 1a.
- der dritte Synchronisationspunkt P3 den Eintritt des ersten Transfersystems 3a in die erste Presse 1a,
- der vierte Synchronisationspunkt P4 den Austritt des ersten Transfersystems 3a aus der ersten Presse la.

Auf der linken Seite der FIG 2 sind beide Zeitbereiche t_ein, t_aus disjunkt. Eine Kollisionsgefahr der Transfersysteme 3a, 3b untereinander oder des Transfersystems 3a, 3b mit dem Werkstück 5 in der Presse 1a, 1b, 1c besteht nicht.

Auf der rechten Seite der FIG 2 wurden die Zeitbereiche t_ein, t_aus übereinander geschoben, d.h., die Zeitbereiche t_ein, t_aus überlappen zeitbereichsweise. Die Zeitbereiche werden soweit ineinander geschoben, dass der dritte Synchronisationspunkt P3 vor dem zweiten Synchronisationspunkt P2 liegt.

Die Abszisse oder der Pfeil im rechten und linken Teil der FIG 2 symbolisiert ein Fortlaufen der Zeit t. Die Zeit t kann auch einem Master-Drehhwinkel Phi_M entsprechen. Einem Wert des Master-Drehwinkels Phi_M entspricht jeweils ein Zeitpunkt, da angenommen wird, dass die virtuelle Achse, wie sie in FIG 1 gezeigt ist, mit konstanter Drehgeschwindigkeit bewegt wird.

Somit entsprechen die jeweiligen Synchronisationspunkte P1, P2, P3, P4 sowohl einem Zeitpunkt sowie einem Master-Drehwinkel Phi_M.

Werden unter Beibehaltung der Randbedingungen RB die Zeitbereiche t_ein, t_aus weitmöglichst überlappt, so ergibt sich ein minimierter Zeitbereich der Mindestzeit t min. Die Mindestzeit t_min gibt an, wie lange die Presse zumindest geöffnet sein muss, um ein Einbringen und ein Ausbringen des Werkstücks 5 in die bzw. aus der Presse 1a, 1b, 1c zu ermöglichen.

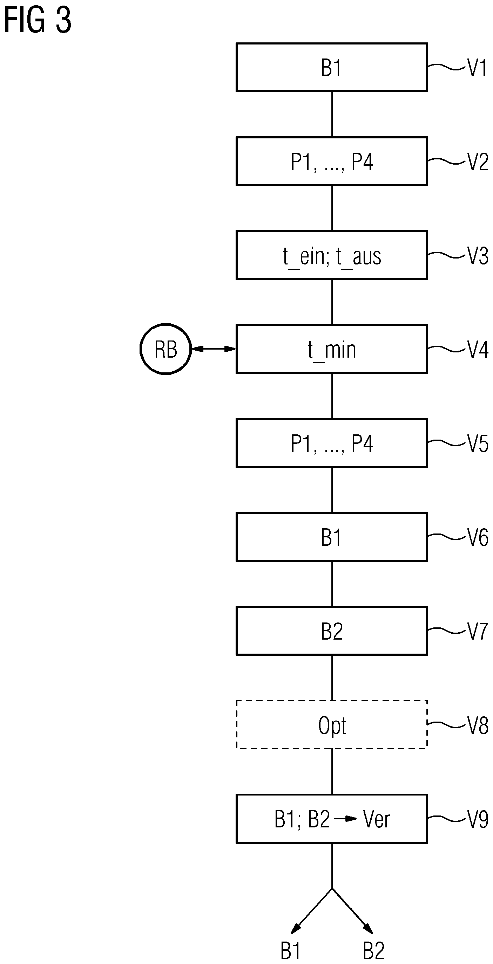

**FIG 3** zeigt eine Darstellung des Verfahrens. Das Verfahren umfasst neun Verfahrensschritte V1 bis V9, welche nachfolgend beschrieben werden.

**Im ersten Verfahrensschritt V1** wird das Pressen-Bewegungsprofil B1 festgelegt. Die Festlegung erfolgt vorzugsweise anhand der vorgesehenen Bearbeitung des Werkstücks 5. Weiter kann das Transfer-Bewegungsprofil B2 durch seine Ortskurve und optional durch seine Geschwindigkeit v festgelegt werden.

**Im zweiten Verfahrensschritt V2** werden die Synchronisationspunkte P1, P2, P3, P4 festgelegt. Die Festlegung erfolgt derart, dass die Zeitpunkte bzw. die Master-Drehwinkel Phi M des jeweiligen Transfer-Bewegungsprofils B2 ausgezeichnet werden.

Der erste Synchronisationspunkt P1 ist der Punkt, bei dem dasjenige Transfersystem 3a, 3b in die Presse 1a, 1b, 1c eindringt, welches das Werkstück 5 aus der Presse 1a, 1b, 1c entfernt.

Der zweite Synchronisationspunkt P2 entspricht dem Zeitpunkt t bzw. dem Master-Drehwinkel Phi_M, bei welchem dasjenige Transfersystem 3a, 3b aus der Presse austritt, welches das Werkstück 5 aus der Presse 1a, 1b, 1c entfernt.

Der dritte Synchronisationspunkt P3 ist der Punkt, bei dem dasjenige Transfersystem 3a, 3b in die Presse 1a, 1b, 1c eindringt, welches das Werkstück 5 in die Pressen 1a, 1b, 1c einbringt.

Der vierte Synchronisationspunkt P4 entspricht dem Zeitpunkt t bzw. dem Master-Drehwinkel Phi_M, bei welchem dasjenige Transfersystem 3a, 3b aus der Presse 1a, 1b, 1c austritt, welches das Werkstück 5 in die Presse 1a, 1b, 1c einbringt.

Im dritten Verfahrensschritt V3 werden die Einbringzeit t_ein und die Ausbringzeit t_aus bestimmt.

Im vierten Verfahrensschritt V4 werden unter Beibehaltung der Randbedingungen RB die Zeitbereiche t_ein, t_aus soweit überlappend zusammengeschoben, dass der Zeitbereich, in dem sich ein Transfersystem in der Presse 1a, 1b, 1c befindet, die Minimalzeit ist. Die Randbedingungen sind insbesondere geometrische Faktoren, die verhindern, dass das jeweilige Transfersystem 3a, 3b mit der Presse kollidiert und/oder die Transfersysteme 3a, 3b untereinander bzw. mit dem Werkstück 5 selbst kollidieren.

Im fünften Verfahrensschritt werden aufgrund der neuen Minimalzeit t_min neue Synchronisationspunkte P1, P2, P3, P4 auf dem jeweiligen Transfer-Bewegungsprofil B2 festgelegt.

Anhand der neuen Synchronisationspunkte P1, P2, P3, P4 werden im sechsten Verfahrensschritt V6 das Pressen-Bewegungsprofil B1 bestimmt. Insbesondere wird die Geschwindigkeit v erhöht oder die Hubzahl der jeweiligen Presse 1a, 1b, 1c erhöht.

Im siebten Verfahrensschritt V7 wird anhand der neuen Synchronisationspunkte P1, P2, P3, P4 das Transfer-Bewegungsprofil B2 bestimmt.

In einem optionalen achten Verfahrensschritt V8 werden das jeweilige Pressen-Bewegungsprofil B1 und/oder das jeweilige Transfer-Bewegungsprofil B2 optimiert. Die Optimierung kann eine Optimierung der jeweiligen Ortskurve sein, so dass die Geschwindigkeit v des jeweiligen Transfer-Bewegungsprofils B2 erhöht werden kann oder die Belastung des Aufnahmeelements 9 des Transfersystems 3a, 3b durch eine geringere Beschleunigung entlastet wird.

Im neunten Verfahrensschritt V9 wird gemäß der Bewegungsprofile B1, B2 der Versatz Ver der jeweiligen Pressen-Bewegungsprofile B1 zueinander bestimmt. Der Versatz Ver ist hierbei als zeitlicher Versatz Ver der jeweiligen Pressen-Bewegungsprofile B1 oder als Master-Drehwinkel-Versatz Ver der jeweiligen Pressen-Bewegungsprofile B1 ausgebildet. Der Versatz gibt an, um welche Zeit t und/oder um welchen Master-Drehwinkel-Versatz Ver die eine Presse 1a, 1b, 1c der jeweils anderen Presse 1a, 1b, 1c nachläuft. Durch das vorstehend beschriebene Verfahren kann die Durchlaufzeit des Werkstücks 5 durch die Anlage A verkürzt werden.

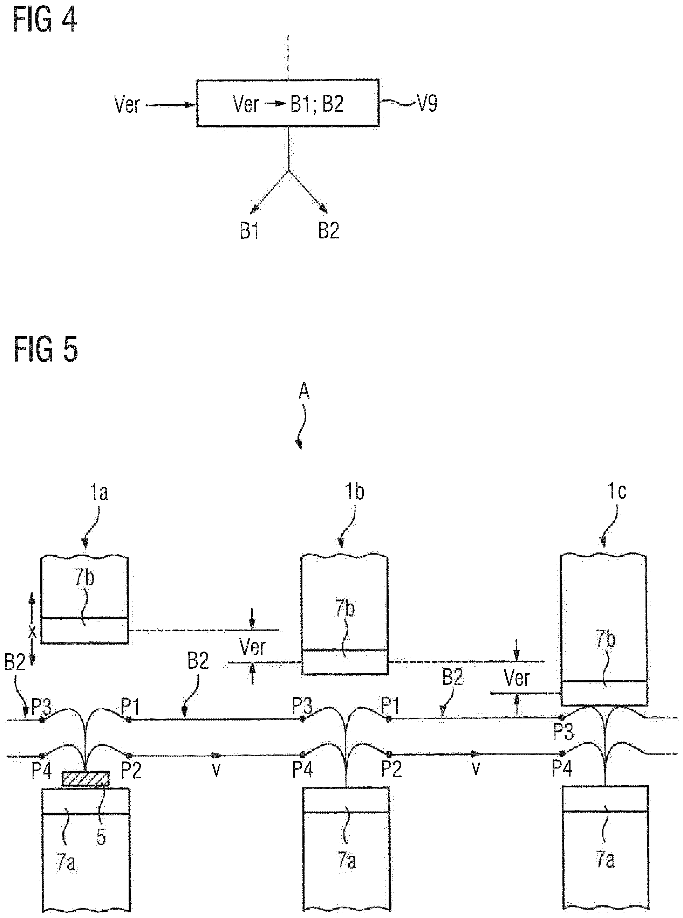

**FIG 4** zeigt eine Darstellung eines Teils des Verfahrens. Hier wird analog vorstehend Ausgeführtem bis zum neunten Verfahrensschritt V9 das Verfahren durchgeführt. Um eine besonders ausgeglichene Leistungsaufnahme der Anlage A zu gewährleisten, wird der Versatz der Pressen vorgegeben. Anhand des Versatzes wird ggf. die Geschwindigkeit v des Transfer-Bewegungsprofils B2 bereichsweise herabgesetzt. Möglich ist auch ein kurzer Stillstand des jeweiligen Transfersystems 3a, 3b. Hierbei wartet das Aufnahmeelement 9 des jeweiligen Transfersystems 3a, 3b vor dem dritten Synchronisationspunkt P3, so dass das Einbringen des Werkstücks 5 in die jeweilige Presse 1a, 1b, 1c etwas später erfolgt.

**FIG 5** zeigt Bewegungsprofile B1, B2. Das Transfer-Bewegungsprofil B2 wird jeweils in seiner Ortskurve gezeigt. Die Geschwindigkeit v des Bewegungsprofils kann konstant sein oder für jeden Punkt unterschiedlich sein. Das Transfer-Bewegungsprofil B2 kann jeweils als Kurvenscheiben-Funktion - optional mit einer Ortsfunktion bzw. Ortskurve verknüpft - ausgebildet sein. Die Bewegung des oberen Werkzeugs 7b der jeweiligen Presse 1a, 1b, 1c ist durch den Doppelpfeil x gekennzeichnet. Die Bewegung des jeweiligen oberen Werkzeugs 7b wird ebenfalls vorteilhaft durch eine Kurvenscheiben-Funktion beschrieben.

Weiter ist der Versatz Ver zwischen den jeweiligen oberen Werkzeugen 7b der jeweils benachbarten Pressen 1a, 1b, 1c gezeigt. Die Synchronisationspunkte P1, P2, P3, P4 sind als Punkte auf dem jeweiligen Transfer-Bewegungsprofil B2 gezeigt. Die Pfeilrichtung des jeweiligen Transfer-Bewegungsprofils B2 zeigt die Durchlaufrichtung des jeweiligen Transfer-Bewegungsprofils B2 an. Die Transfer-Bewegungsprofile B2 zeigen den Verfahrweg des Werkstücks 5 an, welches in der ersten Presse 5 auf dem unteren Werkzeug 7a dargestellt ist.

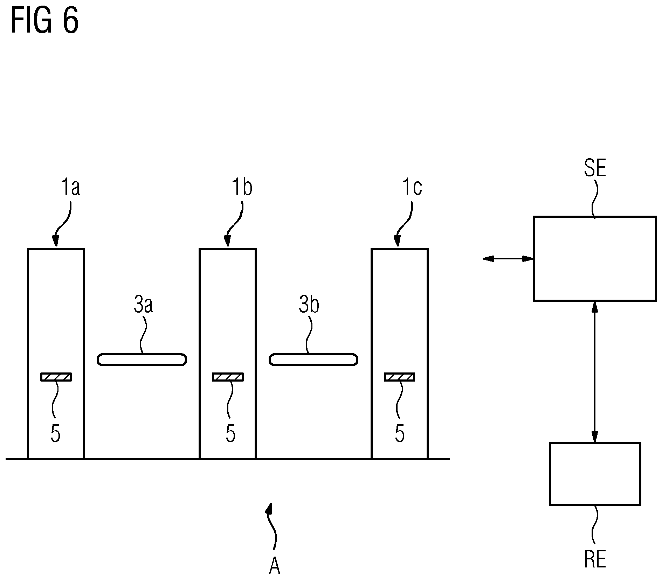

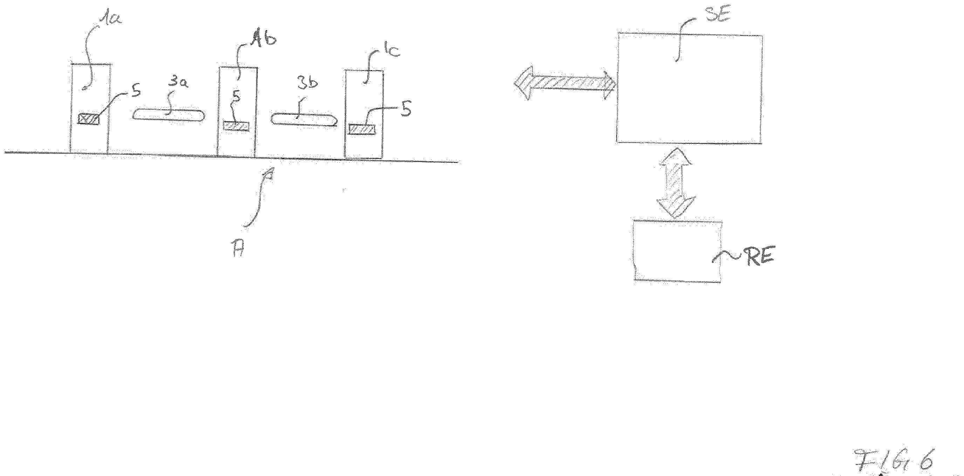

**FIG 6** zeigt eine Anlage A mit einer Steuereinrichtung SE. Die Steuereinrichtung SE dient zur Steuerung der Anlage A. Die Anlage A weist Pressen 1a, 1b, 1c und Transfersysteme 3a, 3b auf. Die Steuereinrichtung SE ist einer Recheneinheit RE zugeordnet. Die Recheneinheit dient zur Bereitstellung der Bewegungsprofile B1, B2 und optional dem jeweiligen Versatz. Anhand der Bewegungsprofile B1, B2 und/oder dem Versatz Ver steuert die Steuereinrichtung die Anlage.

Zusammenfassend betrifft die Erfindung ein Verfahren zur Optimierung von Bewegungsprofilen B1, B2, ein Verfahren zur Bereitstellung von Bewegungsprofilen B1, B2 sowie eine Steuereinrichtung SE und eine Anlage A. Die Bewegungsprofile B1, B2 dienen zur Bestimmung der Bewegung von Werkzeugen 7a, 7b einer Presse 1a, 1b, 1c und der Bewegung eines Aufnahmeelements 9 für ein Werkstück 5 eines Transfersystems 3a, 3b. Transfer-Bewegungsprofile B2 werden anhand von Pressen-Bewegungsprofilen B1 miteinander synchronisiert. Die Synchronisation der Transfer-Bewegungsprofile B2 erfolgt insbesondere durch ein zeitliches Verschieben von Synchronisationspunkten P1, P2, P3, P4 anhand von Randbedingungen RB. Durch die Synchronisation kann ein Versatz der Pressen-Bewegungsprofile B1 bestimmt werden, so dass das Werkstück 5 möglichst schnell durch die Anlage A bearbeitet werden kann.

## Patentansprüche

1. Verfahren zur Optimierung von Bewegungsprofilen (B1, B2) in einer Anlage (A), wobei die Anlage (A) zumindest eine Presse (1a, 1b, 1c) mit einem Werkzeug (7a, 7b) und eine Mehrzahl von Transfersystemen (3a, 3b) aufweist, wobei die Bewegung des jeweiligen Werkzeugs (7a, 7b) durch jeweils ein Pressen-Bewegungsprofil (B1) beschrieben wird und die Bewegung des jeweiligen Transfersystems (3a, 3b) durch jeweils ein Transfer-Bewegungsprofil (B2) beschrieben wird, wobei die Optimierung der Bewegungsprofile (B1, B2) folgende Schritte umfasst:
- Dass das jeweilige Transfer-Bewegungsprofil (B2) vorgegeben wird,
- dass anhand des jeweiligen Transfer-Bewegungsprofils (B2) Synchronisationspunkte (P1, P2, P3, P4) vorgegeben werden, wobei ein erster Synchronisationspunkt (P1) den Eintritt eines zweiten Transfersystems (3b) in die Presse und ein zweiter Synchronisationspunkt (P2) den Austritt (P2, P4) des zweiten Transfersystems (3b) aus der Presse (1a, 1b, 1c) sowie ein dritter Synchronisationspunkt (P3) den Eintritt des ersten Transfersystems (3a) in die Presse (1a, 1b, 1c) definiert und ein vierter Synchronisationspunkt (P4) den Austritt des ersten Transfersystems (3a) aus der Presse (1a, 1b, 1c) definiert,
- dass den Synchronisationspunkten (P1, P2, P3, P4) jeweils Zeitpunkte (t1, t2, t3, t4) zugeordnet sind,
- dass ein erster Zeitbereich (t_aus) zwischen dem ersten Synchronisationspunkt (P1) und dem zweiten Synchronisationspunkt (P2) definiert wird,
- dass ein zweiter Zeitbereich (t_ein) zwischen dem dritten Synchronisationspunkt (P3) und dem vierten Synchronisationspunkt (P4) definiert wird,
- dass die Zeitbereiche (t_ein, t_aus) sukzessive zu Mindestzeiten (t_min) unter Einhaltung von Randbedingungen verkürzt werden,
- dass anhand der Mindestzeiten (t_min) die jeweiligen Pressen-Bewegungsprofile (B1) erstellt werden.

2. Verfahren nach Anspruch 1, wobei als weiterer Schritt vom Verfahren umfasst wird:
- Synchronisation der jeweiligen Pressen-Bewegungsprofile (B1) zueinander anhand eines Versatzes (Ver).

3. Verfahren nach Anspruch 2, wobei der Versatz derart eingestellt wird, dass sich eine möglichst kurze Durchlaufzeit eines Werkstücks (5) durch die Anlage (A) ergibt.

4. Verfahren nach Anspruch 1, wobei als weitere Schritte vom Verfahren umfasst wird:
- Vorgabe des Versatzes (Ver) zwischen den jeweiligen Transfer-Bewegungsprofilen (B2),
- Anpassung der jeweiligen Transfer-Bewegungsprofile (B2) an den Versatz (Ver).

5. Verfahren nach Anspruch 4, wobei der Versatz derart angepasst wird, dass die Anlage (A) eine möglichst konstante Leistungsaufnahme aufweist.

6. Verfahren nach Anspruch 4 oder 5, wobei eine Geschwindigkeit (v) des Transfer-Bewegungsprofils (B2) zwischen den jeweiligen ersten Synchronisationspunkten (P1) und dritten Synchronisationspunkten (P3) und/oder zwischen dem jeweiligen zweiten Synchronisationspunkt (P2) und vierten Synchronisationspunkten (P4) verändert wird.

7. Verfahren nach einem der vorangehenden Ansprüche, wobei die jeweiligen Transfer-Bewegungsprofile (B2) in ihrer Bahnkurve einer Geometrie und/oder Abmessungen der jeweiligen Presse (1a, 1b, 1c) angepasst werden.

8. Verfahren nach einem der vorangehenden Ansprüche, wobei die Randbedingungen für das jeweilige Transfer-Bewegungsprofil (B2) die Geometrie der Presse (1a, 1b, 1c), insbesondere die Geometrie des jeweiligen Werkzeuges (7a, 7b) der Presse (1aa, 1b, 1c), des jeweiligen Werkstücks (5) sowie optional das Pressen-Bewegungsprofil (B1) berücksichtigt.

9. Verfahren nach einem der vorangehenden Ansprüche, wobei die Randbedingungen (RB) für das jeweilige Pressen-Bewegungsprofil (B1) die Bearbeitung des Werkstücks (5) und/oder einen Sicherheitsabstand vom jeweils bewegten Werkzeug (7a, 7b) zum Werkstück (5) und/oder zum jeweiligen Transfersystem (3a, 3b) berücksichtigen.

10. Verfahren nach einem der vorangehenden Ansprüche, wobei das jeweilige Transfer-Bewegungsprofil (B2) und/oder das jeweilige Pressen-Bewegungsprofil (B1) zwischen einzelnen Schritten des Verfahrens in der Geschwindigkeit (v) verändert wird, optional mit einer Wartezeit ausgestattet wird und/oder eine Veränderung der Bahnkurve erfolgt.

11. Verfahren nach einem der vorangehenden Ansprüche, wobei das jeweilige Pressen-Bewegungsprofil (B1), insbesondere die Geschwindigkeit (v) des Pressen-Bewegungsprofils (B1), als Kurvenscheibenfunktion ausgebildet ist.

12. Computerprogrammprodukt zur Installation und zum Ablauf auf einer Recheneinheit, wobei im Rahmen des Ablaufs des Computerprogrammprodukts auf der Recheneinheit ein Verfahren gemäß einem der vorangehenden Ansprüche ausgeführt wird.

13. Verwendung des Verfahrens nach einem der Ansprüche 1 bis 8 zur Bereitstellung von zumindest einem Transfer-Bewegungsprofil (B2) und/oder zumindest einem Pressen-Bewegungsprofil (B1) für die Anlage (A).

14. Steuereinrichtung (SE) für eine Anlage (A), wobei die Steuereinrichtung (SE) zur Steuerung von Pressen (1a, 1b, 1c) vorgesehen ist, wobei die Steuerung anhand von Bewegungsprofilen (B1, B2) erfolgt, die mittels einem Verfahren nach einem der Ansprüche 1 bis 10 bereitgestellt worden sind.

15. Anlage (A), aufweisend zumindest eine Presse (1a, 1b, 1b) und zumindest zwei Transfersysteme (3a, 3b) sowie eine Steuereinrichtung (SE) nach Anspruch 14.

## Claims

1. Method for the optimizing of movement profiles (B1, B2) in a system (A), wherein the system (A) has at least one press (1a, 1b, 1c) with a tool (7a, 7b) and a plurality of transfer systems (3a, 3b), wherein the movement of the respective tool (7a, 7b) is described respectively by a press movement profile (B1), and the movement of the respective transfer system (3a, 3b) is described respectively by a transfer movement profile (B2), wherein the optimizing of the movement profiles (B1, B2) comprises the following steps:
- that the respective transfer movement profile (B2) is preset,
- that by means of the respective transfer movement profile (B2), synchronization points (P1, P2, P3, P4) are preset, wherein a first synchronization point (P1) defines the entry of a second transfer system (3b) into the press and a second synchronization point (P2) defines the exit (P2, P4) of the second transfer system (3b) from the press (1a, 1b, 1c) and a third synchronization point (P3) defines the entry of the first transfer system (3a) into the press (1a, 1b, 1c) and a fourth synchronization point (P4) defines the exit of the first transfer system (3a) from the press (1a, 1b, 1c),
- that instants of time (t1, t2, t3, t4) are respectively assigned to the synchronization points (P1, P2, P3, P4),
- that a first time range (t_out) is defined between the first synchronization point (P1) and the second synchronization point (P2),
- that a second time range (t_in) is defined between the third synchronization point (P3) and the fourth synchronization point (P4),
- that the time ranges (t_in, t_out) are shortened successively to minimum times (t_min) whilst maintaining boundary conditions,
- that by means of the minimum times (t_min) the respective press movement profiles (B1) are created.

2. Method according to Claim 1, wherein the following is included by the method as a further step:
- synchronization of the respective press movement profiles (B1) with respect to one another by means of an offset (Ver).

3. Method according to Claim 2, wherein the offset is set such that as short a throughput time as possible of a workpiece (5) through the system (A) results.

4. Method according to Claim 1, wherein the following is included by the method as further steps:
- presetting of the offset (Ver) between the respective transfer movement profiles (B2),
- adaptation of the respective transfer movement profiles (B2) to the offset (Ver).

5. Method according to Claim 4, wherein the offset is adapted such that the system (A) has as constant a power input as possible.

6. Method according to Claim 4 or 5, wherein a speed (v) of the transfer movement profile (B2) is changed between the respective first synchronization points (P1) and third synchronization points (P3) and/or between the respective second synchronization point (P2) and fourth synchronization points (P4).

7. Method according to one of the preceding claims, wherein the respective transfer movement profiles (B2) are adapted in their path curve to a geometry and/or dimensions of the respective press (1a, 1b, 1c).

8. Method according to one of the preceding claims, wherein the boundary conditions for the respective transfer movement profile (B2) take into consideration the geometry of the press (1a, 1b, 1c), in particular the geometry of the respective tool (7a, 7b) of the press (1a, 1b, 1c), of the respective workpiece (5) and optionally the press movement profile (B1).

9. Method according to one of the preceding claims, wherein the boundary conditions (RB) for the respective press movement profile (B1) take into consideration the processing of the workpiece (5) and/or a safety distance from the respectively moved tool (7a, 7b) to the workpiece (5) and/or to the respective transfer system (3a, 3b).

10. Method according to one of the preceding claims, wherein the respective transfer movement profile (B2) and/or the respective press movement profile (B1) is changed in speed (v) between individual steps of the method, optionally is equipped with a waiting time and/or a change to the path curve takes place.

11. Method according to one of the preceding claims, wherein the respective press movement profile (B1), in particular the speed (v) of the press movement profile (B1), is configured as a cam function.

12. Computer program product for installation and running on a processing unit, wherein within the running of the computer program product on the processing unit a method according to one of the preceding claims is carried out.

13. Use of the method according to one of Claims 1 to 8 for the provision of at least one transfer movement profile (B2) and/or at least one press movement profile (B1) for the system (A).

14. Control device (SE) for a system (A), wherein the control device (SE) is provided for the controlling of presses (1a, 1b, 1c), wherein the control takes place by means of movement profiles (B1, B2), which have been provided by means of a method according to one of Claims 1 to 10.

15. System (A), having at least one press (1a, 1b, 1c) and at least two transfer systems (3a, 3b) and a control device (SE) according to Claim 14.

## Revendications

1. Procédé d'optimisation de profils de mouvement (B1, B2) dans une installation (A), dans lequel l'installation (A) comprend au moins une presse (1a, 1b, 1c) avec un outil (7a, 7b) et une pluralité de systèmes de transfert (3a, 3b), dans lequel le mouvement de l'outil respectif (7a, 7b) est décrit par un profil de mouvement de presse respectif (B1) et le mouvement du système de transfert respectif (3a, 3b) est décrit par un profil de mouvement de transfert respectif (B2), dans lequel l'optimisation des profils de mouvement (B1, B2) comprend les étapes suivantes :
- le profil de mouvement de transfert respectif (B2) est spécifié,
- les points de synchronisation (P1, P2, P3, P4) sont prédéfinis à l'aide du profil de mouvement de transfert respectif (B2), dans lequel un premier point de synchronisation (P1) définit l'entrée d'un second système de transfert (3b) dans la presse et un deuxième point de synchronisation (P2) définit la sortie (P2, P4) du second système de transfert (3b) de la presse (1a, 1b, 1c) et un troisième point de synchronisation (P3) définit l'entrée du premier système de transfert (3a) dans la presse (1a, 1b, 1c) et un quatrième point de synchronisation (P4) définit la sortie du premier système de transfert (3a) de la presse (1a, 1b, 1c),
- les points de synchronisation (P1, P2, P3, P4) se voient attribuer chacun des points de temps (t1, t2, t3, t4),
- une première plage de temps (t_aus) est définie entre le premier point de synchronisation (P1) et le deuxième point de synchronisation (P2),
- un second intervalle de temps (t_ein) est défini entre le troisième point de synchronisation (P3) et le quatrième point de synchronisation (P4),
- les plages de temps (t_ein, t_aus) sont successivement raccourcies à des durées minimales (t_min) conformément aux conditions aux limites,
- les profils de mouvement de presse respectifs (B1) sont créés à l'aide des temps minimaux (t_min).

2. Procédé selon la revendication 1, dans lequel, en tant qu'étape supplémentaire, le procédé comprend :
- la synchronisation des profils de mouvement de presse respectifs (B1) entre eux à l'aide d'un décalage (Ver).

3. Procédé selon la revendication 2, dans lequel le décalage est réglé de sorte que le temps de cycle le plus court possible d'une pièce (5) résulte de l'installation (A).

4. Procédé selon la revendication 1, dans lequel, en tant qu'étapes supplémentaires, le procédé comprend :
- la spécification du décalage (Ver) entre les profils de mouvement de transfert respectifs (B2),
- l'adaptation des profils de mouvement de transfert respectifs (B2) au décalage (Ver).

5. Procédé selon la revendication 4, dans lequel le décalage est ajusté de sorte que l'installation (A) présente un apport en énergie le plus constant possible.

6. Procédé selon la revendication 4 ou 5, dans lequel une vitesse (v) du profil de mouvement de transfert (B2) est modifiée entre les premiers points de synchronisation (P1) et les troisièmes points de synchronisation (P3) respectifs et/ou entre le deuxième point de synchronisation (P2) et les quatrièmes points de synchronisation (P4) respectifs.

7. Procédé selon l'une des revendications précédentes, dans lequel les profils de mouvement de transfert respectifs (B2) sont adaptés dans leur trajectoire d'une géométrie et/ou de dimensions de la presse respective (1a, 1b, 1c).

8. Procédé selon l'une des revendications précédentes, dans lequel les conditions aux limites prennent en compte, pour le profil de mouvement de transfert respectif (B2), la géométrie de la presse (1a, 1b, 1c), en particulier la géométrie de l'outil respectif (7a, 7b) de la presse (1aa, 1b, 1c), de la pièce respective (5) et éventuellement le profil de mouvement de presse (B1).

9. Procédé selon l'une des revendications précédentes, dans lequel les conditions aux limites (RB) prennent en compte, pour le profil de mouvement de presse respectif (B1), l'usinage de la pièce (5) et/ou une distance de sécurité entre l'outil mobile respectif (7a, 7b) et la pièce (5) et/ou le système de transfert respectif (3a, 3b).

10. Procédé selon l'une des revendications précédentes, dans lequel le profil de mouvement de transfert respectif (B2) et/ou le profil de mouvement de presse respectif (B1) entre des étapes individuelles du procédé à la vitesse (v) est modifié, éventuellement assorti d'un temps d'attente et/ou un changement de trajectoire a lieu.

11. Procédé selon l'une des revendications précédentes, dans lequel le profil de mouvement de presse respectif (B1), en particulier la vitesse (v) du profil de mouvement de presse (B1), est conçu comme une fonction de disque à cames.

12. Produit programme d'ordinateur destiné à être installé et exécuté sur une unité d'ordinateur, dans lequel un procédé selon l'une des revendications précédentes est mis en œuvre dans le cadre de l'exécution du produit programme d'ordinateur sur l'ordinateur.

13. Utilisation du procédé selon l'une des revendications 1 à 8 pour fournir au moins un profil de mouvement de transfert (B2) et/ou au moins un profil de mouvement de presse (B1) pour l'installation (A).

14. Dispositif de commande (SE) pour une installation (A), dans lequel le dispositif de commande (SE) est prévu pour commander les presses (1a, 1b, 1c), dans lequel la commande a lieu à l'aide des profils de mouvement (B1, B2) qui ont été fournis au moyen d'un procédé selon l'une des revendications 1 à 10.

15. Installation (A), comprenant au moins une presse (1a, 1b, 1b) et au moins deux systèmes de transfert (3a, 3b) ainsi qu'un dispositif de commande (SE) selon la revendication 14.
